# FASCICULE DE BREVET EUROPEEN

(11) **EP 3 891 036 B1**
(45) Date de publication et mention de la délivrance du brevet: **13.09.2023**
(21) Numéro de dépôt: 19839639.2
(22) Date de dépôt: 22.11.2019
(51) Int. Cl.: B60W 50/10, B60W 30/16, B60W 50/14, B60W 50/00

(54) **PROCÉDÉ DE GESTION D'UN MODE DE CONDUITE ASSISTÉE D'UN VÉHICULE AUTOMOBILE METTANT EN OEUVRE UNE FONCTION DE RÉGULATION DE VITESSE ADAPTATIVE**
VERFAHREN ZUR VERWALTUNG EINES UNTERSTÜTZTEN FAHRMODUS EINES KRAFTFAHRZEUGS MIT ADAPTIVER FAHRSTEUERUNGSFUNKTION
METHOD FOR MANAGING AN ASSISTED DRIVING MODE OF A MOTOR VEHICLE IMPLEMENTING AN ADAPTIVE CRUISE-CONTROL FUNCTION

(30) Priorité: 06.12.2018 FR 1872466
(43) Date de publication de la demande: 13.10.2021
(73) Titulaire: PSA Automobiles SA, 78300 Poissy (FR)
(72) Inventeur: COHEN, Christel, 92160 ANTONY (FR); HECKETSWEILER, Thierry, 90800 BAVILLIERS (FR); ROTHENBURGER, Nicolas, 90400 ANDELNANS (FR)
(86) Numéro de dépôt international: PCT/FR2019/052783
(87) Numéro de publication internationale: WO 2020/115391

(56) Documents cités:
- FR-A1- 2 964 632
- US-A1- 2014 303 827

## Description

L'invention se rapporte au domaine des systèmes d'aide à la conduite équipant les véhicules automobiles. Les systèmes d'aide à la conduite, souvent dénommés sous l'acronyme anglais ADAS (pour « *Advanced driver-assistance* systems »), ont pour but d'alléger la charge du conducteur, notamment en le libérant de certaines tâches, en améliorant son attention et/ou sa perception de l'environnement, en détectant certains risques, en effectuant automatiquement des actions en réponse à la détection de ces risques, etc.

Pour remplir les fonctions souhaitées, les systèmes d'aide à la conduite fonctionnent à l'aide de capteurs équipant le véhicule et permettant de percevoir l'environnement du véhicule, et notamment les véhicules situés à proximité. Cette perception de l'environnement par le système d'aide à la conduite permet de prévenir les risques d'accidents en garantissant le respect de règles prédéfinies, comme par exemple celle d'imposer que le véhicule se maintienne à une distance minimale du véhicule qui le précède.

Parmi les différentes fonctions d'aide à la conduite, il est connu une fonction de régulation longitudinale adaptative, couramment désignée par le sigle anglais ACC (pour « *adaptative cruise control* »). Cette fonction a pour but de maintenir le véhicule à une vitesse de consigne définie par le conducteur, tout en régulant la vitesse du véhicule pour gérer le suivi d'un véhicule plus lent le cas échéant. Ainsi, si un véhicule circulant à une vitesse inférieure à la vitesse de consigne définie par le conducteur précède le véhicule concerné, le système d'aide à la conduite va gérer le freinage de ce dernier (désigné dans la suite de la présente demande « véhicule hôte »). Toutefois, le conducteur reste responsable de la conduite du véhicule et doit être en mesure d'intervenir à n'importe quel moment si la situation l'exige.

On connait par le document US 2014/303827 des systèmes et procédés de transition de commande d'un véhicule autonome à un conducteur.

La fonction ACC peut être désactivée à tout moment par le conducteur, par exemple en actionnant la pédale de frein ou un bouton de commande situé par exemple sur ou à proximité du volant, et notamment sous le volant. Dans ce dernier cas, le positionnement du bouton de commande peut amener le conducteur à désactiver involontairement la fonction ACC. Or, cette désactivation involontaire peut se produire au cours d'une phase de freinage engagée par le système d'aide à la conduite, par exemple suite à un freinage du véhicule précédant le véhicule hôte. Dans un tel cas, le conducteur dispose de très peu de temps pour intervenir et gérer une situation qui est potentiellement critique.

Afin de s'assurer que le conducteur est conscient que la fonction ACC vient d'être désactivée via le bouton de commande, il est connu d'émettre un message d'alerte (généralement un message visuel et sonore) afin que le conducteur soit prévenu et puisse intervenir rapidement s'il a désactivé la fonction ACC de manière involontaire. Toutefois, comme le système d'aide à la conduite n'est évidemment pas en mesure de discriminer les cas de désactivation involontaire et les cas de désactivation volontaire, le message d'alerte est systématiquement émis lors de la désactivation de la fonction ACC en phase de freinage par appui sur le bouton de commande. Or, lorsqu'un conducteur désactive volontairement la fonction ACC, il peut être agacé que le système d'aide à la conduite émette à chaque fois un message d'alerte qui est, dans ces circonstances, injustifié. Il en ressort une mauvaise perception du système en termes de qualité.

La présente invention a pour but de remédier aux inconvénients de l'état de la technique, et plus particulièrement ceux ci-dessus exposés, en proposant un procédé de gestion d'un mode de conduite assistée dans lequel la désactivation d'une fonction d'aide à la conduite est réalisée de manière à éviter l'envoi de messages d'alerte injustifiés.

À cet effet, l'invention concerne un procédé de gestion d'un mode de conduite assistée d'un véhicule automobile, ci-après véhicule hôte, le mode de conduite assistée mettant en oeuvre une fonction de régulation de vitesse adaptative, ci-après fonction ACC, le procédé comportant les étapes consistant à :
- déterminer, lorsque la désactivation de la fonction ACC est demandée par le conducteur, si cette demande est faite par l'intermédiaire d'un bouton de commande ;
- si la désactivation de la fonction ACC est demandée par l'intermédiaire du bouton de commande, déterminer si un véhicule, ci-après véhicule cible, précède le véhicule hôte ;
   - émettre un message d'alerte à l'attention du conducteur si un véhicule cible est détecté et si l'écart entre le véhicule cible et le véhicule hôte est inférieur à une valeur seuil ;
   - désactiver la fonction ACC,
   l'étape de déterminer si la demande de désactivation de la fonction ACC est faite par l'intermédiaire d'un bouton de commande consiste en outre à déterminer si cette désactivation est sollicitée durant une phase de freinage.

Ainsi, le procédé conforme à l'invention permet de limiter le nombre de situations dans lesquelles, en cas de désactivation de la fonction d'aide à la conduite par l'intermédiaire du bouton de commande (et non par l'intermédiaire de la pédale de frein), le système d'aide à la conduite va émettre un message d'alerte à l'attention du conducteur. Ainsi, en évitant qu'un message d'alerte ne soit émis lorsque la désactivation est sollicitée dans une situation ne nécessitant pas l'intervention à bref délai du conducteur, on évite que le conducteur perçoive l'émission de messages d'alerte comme intempestive, sans diminuer le niveau de sécurité.

Dans une réalisation, la valeur seuil est exprimée sous la forme d'une durée de temps séparant le véhicule hôte du véhicule cible, ou temps intervéhicule.

Dans une réalisation, la valeur seuil est comprise entre 1 et 5 secondes, de préférence entre 1,5 et 3 secondes.

Dans une réalisation, la valeur seuil est exprimée sous la forme d'une distance séparant le véhicule hôte du véhicule cible, ou distance intervéhicule.

Dans une réalisation, la valeur seuil est comprise entre 1 et 100 mètres, de préférence entre 3 et 100 mètres.

L'invention concerne également un produit programme d'ordinateur comprenant des instructions qui, lorsque le programme est exécuté par un ordinateur, conduisent celui-ci à mettre en oeuvre les étapes du procédé tel que défini ci-dessus.

L'invention concerne également un système de conduite assistée comportant un calculateur, au moins un capteur et des actionneurs agencés pour mettre en oeuvre le procédé tel que défini ci-dessus.

L'invention concerne également un véhicule automobile équipé d'un système de conduite assistée tel que défini ci-dessus et/ou mettant en oeuvre un procédé tel que défini plus haut.

La présente invention sera mieux comprise à la lecture de la description détaillée qui suit, faite en référence au dessins annexés, dans lesquels :
[Fig. 1] La figure 1 représente un véhicule équipé d'un système de conduite assistée permettant la mise en oeuvre d'un procédé conforme à l'invention ;
[Fig. 2] La figure 2 représente les étapes de mise en oeuvre d'un procédé conforme à l'invention.

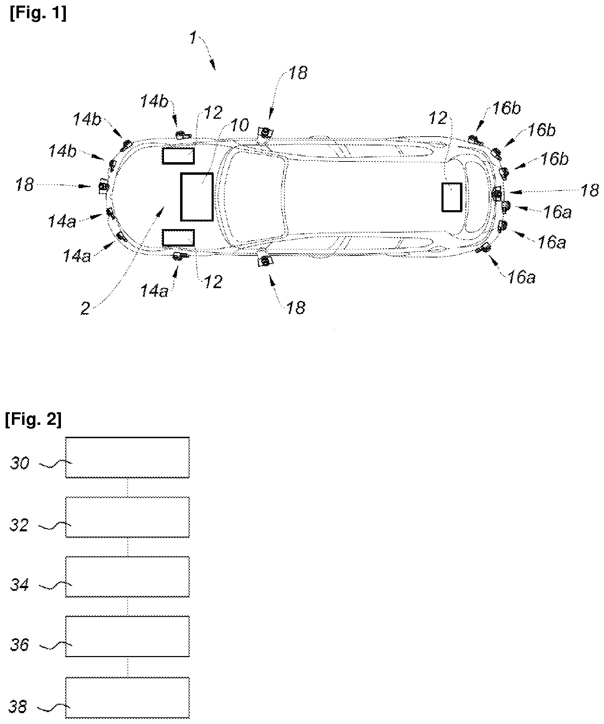

La figure 1 représente un véhicule automobile apte à mettre en oeuvre une ou plusieurs fonctions d'aide à la conduite, et qui est à cet effet équipé d'un système de conduite assistée 2. Dans la suite de la présente description ce véhicule sera dénommé véhicule hôte 1. Le système de conduite assistée 2 comporte notamment un calculateur 10, des actionneurs 12, ainsi qu'une pluralité de détecteurs, dans l'exemple une pluralité de capteurs 14a, 14b, 16a, 16b, 18 répartis sur l'avant, l'arrière et les côtés du véhicule hôte 1. Ces capteurs peuvent inclure un ou plusieurs des types de capteurs suivants : capteurs à ultrasons, radars, lidars, caméras à vision de jour, caméras à vision de nuit, etc. Le système de conduite assistée 2 comporte dans l'exemple quatre caméras 18 (soit une caméra avant, une caméra arrière et deux caméras latérales) et une pluralité de capteurs 14a, 14b, 16a, 16b de type capteur à ultrasons et/ou radar et/ou lidar. Le calculateur 10 reçoit les données fournies par l'ensemble des capteurs 14a, 14b, 16a, 16b et par l'ensemble des caméras 18.

Grâce à l'ensemble de ces capteurs, le calculateur 10 est apte à détecter la présence d'obstacles dans l'environnement du véhicule, et en particulier la présence de véhicules dans cet environnement, que ce soit sur la voie courante du véhicule hôte 1 ou sur les voies adjacentes.

Le calculateur 10 est par ailleurs relié à une pluralité d'actionneurs 12, qui comportent des dispositifs aptes à agir notamment sur l'accélérateur et le système de freinage du véhicule hôte, afin d'en contrôler l'allure. Avantageusement, les actionneurs 12 comportent également des dispositifs aptes à agir sur la direction du véhicule afin d'en contrôler la trajectoire.

Le système de conduite assistée est configuré pour mettre en oeuvre, dans un mode de conduite assistée, une ou plusieurs fonctions d'assistance, dont notamment une fonction de régulation de vitesse adaptative, ci-après fonction ACC. Ainsi que mentionné plus haut, une telle fonction permet de réguler la vitesse du véhicule sans intervention du conducteur (ce dernier devant toutefois conserver le contrôle du véhicule, et en particulier le contrôle de la direction, puisqu'il s'agit là d'une fonction d'assistance), en respectant une consigne de marge de sécurité vis-à-vis du véhicule précédant le véhicule hôte, c'est-à-dire un écart minimum entre ces deux véhicules. Cette consigne peut être exprimée par exemple en distance intervéhicule (c'est-à-dire la distance séparant deux véhicules successifs sur une même voie de circulation, ce paramètre étant couramment désigné par l'acronyme DIV), ou en temps intervéhicule (c'est-à-dire la durée de temps, mesurée en un point fixe de la voie de circulation, séparant le passage de deux véhicules successifs sur une même voie de circulation, ce paramètre est souvent désigné par l'acronyme TIV) ou encore en temps avant collision (c'est-à-dire le temps estimé avant collision entre le véhicule cible et le véhicule hôte, ce paramètre est souvent désigné par l'acronyme anglais TTC, pour « Time To Collision »). De préférence, le système de conduite assistée 2 comporte au moins une caméra et un capteur de type radar pour mettre en oeuvre la fonction ACC décrite ci-dessus

On décrit ci-après un exemple de mise en oeuvre du procédé d'activation d'un mode de conduite autonome conforme à l'invention, en relation avec la figure 2.

Lors de la mise en oeuvre du procédé conforme à l'invention, le véhicule hôte est dans un état initial dans lequel le véhicule fonctionne dans un mode de conduite assistée avec une ou plusieurs fonctions d'assistance activées, dont au moins la fonction de régulation de vitesse adaptative, ci-après fonction ACC. Lorsqu'elle est active, la fonction ACC peut être désactivée par le conducteur d'au moins deux manières distinctes : par un appui sur la pédale de frein ou par un appui sur un bouton de commande équipant le véhicule et servant également à l'activation de cette fonction. Un tel bouton de commande est situé sur ou à proximité du volant, par exemple derrière ou sous le volant.

Lorsque le conducteur demande la désactivation de la fonction ACC (étape 30), une étape 32 consiste à déterminer si cette désactivation est faite par l'intermédiaire du bouton de commande dédié ou par l'intermédiaire de la pédale de frein.

Si la désactivation est demandée par l'intermédiaire du bouton de commande dédié, ce qui exclue une demande de désactivation faite par actionnement de la pédale de frein, une étape 34 consiste à déterminer si un véhicule, ci-après véhicule cible, précède le véhicule hôte sur la même voie de circulation (étape 34) et, le cas échéant, à déterminer l'écart entre le véhicule cible et le véhicule hôte.

Si un véhicule cible précède le véhicule hôte et que l'écart entre les deux véhicules est inférieur à une valeur seuil, alors le système de conduite assistée 2 du véhicule procède à l'émission d'un message d'alerte à l'attention du conducteur (étape 36), lui indiquant que la fonction ACC est désactivée, afin que le conducteur puisse intervenir rapidement en reprenant le contrôle de la vitesse du véhicule. Le message d'alerte peut être de tout type adapté, par exemple un voyant lumineux, une indication sur un écran, une notification sonore, vocale, etc. Avantageusement, le message d'alerte est à la fois sonore et visuel. Parallèlement à l'émission du message d'alerte, le système de conduite assistée procède à la désactivation de la fonction ACC (étape 38).

Le procédé objet de l'invention permet donc de limiter le nombre de situations dans lesquelles un message d'alerte sera émis lorsque le conducteur désactive la fonction ACC par l'intermédiaire du bouton de commande prévu à cet effet et non par l'intermédiaire de la pédale de frein : en réservant l'émission d'un message d'alerte aux situations nécessitant une intervention immédiate ou à très bref délai du conducteur, le nombre de situations suscitant l'émission d'un message est fortement diminué. Ainsi, le conducteur ne subit plus une émission systématique de messages d'alerte qui pourrait être vue comme intempestive et gênante.

L'étape 32 consistant à déterminer si la désactivation de la fonction ACC est demandée par l'utilisateur par l'intermédiaire du bouton de commande prévu à cet effet consiste également à déterminer si le véhicule est en phase de freinage. Vérifier cette deuxième condition permet de limiter encore plus les cas dans lesquels un message d'alerte sera émis, puisqu'aucun message ne sera émis si la désactivation de la fonction ACC est faite alors que le véhicule n'est pas dans une phase de freinage.

L'écart entre le véhicule cible et le véhicule hôte peut être exprimé, comme mentionné plus haut, de différentes façons : en temps intervéhicule (TIV), en distance intervéhicule (DIV), ou en temps avant collision (TTC). Lorsqu'elle est déterminée en temps intervéhicule (TIV) ou en temps avant collision (TTC), la valeur seuil pourra être comprise entre 1 et 5 secondes. Lorsqu'elle est déterminée en distance intervéhicule (DIV), la valeur seuil, qui dépendra de la vitesse, pourra être comprise entre 1 et 100 mètres.

## Revendications

1. Procédé de gestion d'un mode de conduite assistée d'un véhicule automobile, ci-après véhicule hôte (1), le mode de conduite assistée mettant en oeuvre une fonction de régulation de vitesse adaptative, ci-après fonction ACC, le procédé comportant les étapes consistant à :
- déterminer (32), lorsque une désactivation de la fonction ACC est demandée (30) par le conducteur, si cette demande est faite par l'intermédiaire d'un bouton de commande ;
- si la désactivation de la fonction ACC est demandée par l'intermédiaire du bouton de commande, déterminer (34) si un véhicule, ci-après véhicule cible, précède le véhicule hôte ;
- émettre (36) un message d'alerte à l'attention du conducteur si le véhicule cible est détecté et si un écart entre le véhicule cible et le véhicule hôte est inférieur à une valeur seuil ; et
- désactiver (38) la fonction ACC ; l'étape de déterminer (32) si la demande de désactivation de la fonction ACC est faite par l'intermédiaire d'un bouton de commande consistant en outre à déterminer si cette désactivation est sollicitée durant une phase de freinage.

2. Procédé selon la revendication précédente, dans lequel la valeur seuil est exprimée sous la forme d'une durée de temps séparant le véhicule hôte (1) du véhicule cible, ou temps intervéhicule.

3. Procédé selon la revendication précédente, dans lequel la valeur seuil est comprise entre 1 et 5 secondes, de préférence entre 1,5 et 3 secondes.

4. Procédé selon la revendication 1, dans lequel la valeur seuil est exprimée sous la forme d'une distance séparant le véhicule hôte (1) du véhicule cible, ou distance intervéhicule.

5. Procédé selon la revendication précédente, dans lequel la valeur seuil est comprise entre 1 et 100 mètres, de préférence entre 3 et 100 mètres.

6. Produit programme d'ordinateur comprenant des instructions qui, lorsque le programme est exécuté par un ordinateur, conduisent celui-ci à mettre en oeuvre les étapes du procédé selon l'une des revendications 1 à 5.

7. Système de conduite assistée (2) comportant un calculateur (10), au moins un bouton de commande, un moyen pour émettre un message d'alerte, un capteur (14a, 14b, 16a, 16b, 18) et des actionneurs (12) agencés pour mettre en oeuvre le procédé conforme à l'une des revendications 1 à 5.

8. Véhicule automobile (1) équipé d'un système de conduite assistée (2) conforme à la revendication précédente et mettant en oeuvre un procédé conforme à l'une des revendications 1 à 5.

## Patentansprüche

1. Verfahren zum Verwalten eines unterstützten Fahrmodus eines Kraftfahrzeugs, im Folgenden Hostfahrzeug (1), wobei der unterstützte Fahrmodus eine adaptive Geschwindigkeitsregelungsfunktion, im Folgenden ACC-Funktion, implementiert, wobei das Verfahren die Schritte umfasst:
- Ermitteln (32), wann eine Deaktivierung der ACC-Funktion vom Fahrer angefordert (30) wird, wenn diese Anforderung über eine Bedientaste erfolgt;
- wenn eine Deaktivierung der ACC-Funktion über die Steuertaste angefordert wird, Bestimmen (34), ob ein Fahrzeug, im Folgenden Zielfahrzeug, dem Host-Fahrzeug vorausfährt;
- Senden (36) einer Warnmeldung an den Fahrer, wenn das Zielfahrzeug erkannt wird und wenn eine Differenz zwischen dem Zielfahrzeug und dem Hostfahrzeug kleiner als ein Schwellenwert ist; Und
- die ACC-Funktion deaktivieren (38);
wobei der Schritt des Bestimmens (32), ob die Anforderung zur Deaktivierung der ACC-Funktion über einen Steuerknopf erfolgt, weiterhin darin besteht, zu bestimmen, ob diese Deaktivierung während einer Bremsphase angefordert wird.

2. Verfahren nach dem vorhergehenden Anspruch, bei dem der Schwellenwert in Form einer Zeitdauer ausgedrückt wird, die das Host-Fahrzeug (1) vom Zielfahrzeug trennt, oder als Zeitspanne zwischen Fahrzeugen.

3. Verfahren nach dem vorhergehenden Anspruch, bei dem der Schwellwert zwischen 1 und 5 Sekunden, vorzugsweise zwischen 1,5 und 3 Sekunden liegt.

4. Verfahren nach Anspruch 1, bei dem der Schwellenwert in Form eines Abstands ausgedrückt wird, der das Host-Fahrzeug (1) vom Zielfahrzeug trennt, oder als Abstand zwischen Fahrzeugen.

5. Verfahren nach dem vorhergehenden Anspruch, bei dem der Schwellenwert zwischen 1 und 100 Metern, vorzugsweise zwischen 3 und 100 Metern liegt.

6. Computerprogrammprodukt mit Anweisungen, die bei der Ausführung des Programms durch einen Computer diesen dazu veranlassen, die Schritte des Verfahrens nach einem der Ansprüche 1 bis 5 auszuführen.

7. Assistiertes Fahrsystem (2), umfassend einen Computer (10), mindestens eine Steuertaste, Mittel zum Übertragen einer Warnmeldung, einen Sensor (14a, 14b, 16a, 16b, 18) und Aktoren (12), die zur Umsetzung des vorgesehen sind Verfahren nach einem der Ansprüche 1 bis 5.

8. Kraftfahrzeug (1), das mit einem assistierten Fahrsystem (2) nach dem vorhergehenden Anspruch ausgestattet ist und ein Verfahren nach einem der Ansprüche 1 bis 5 durchführt.

## Claims

1. Method for managing an assisted driving mode of a motor vehicle, hereinafter host vehicle (1), the assisted driving mode implementing an adaptive cruise control function, hereinafter ACC function, the method comprising the steps of:
- determining (32), when a deactivation of the ACC function is requested (30) by the driver, if this request is made via a control button;
- if deactivation of the ACC function is requested via the control button, determining (34) whether a vehicle, hereinafter target vehicle, precedes the host vehicle;
- transmitting (36) an alert message to the attention of the driver if the target vehicle is detected and if a difference between the target vehicle and the host vehicle is less than a threshold value; And
- deactivate (38) the ACC function;
the step of determining (32) whether the request for deactivation of the ACC function is made via a control button further consisting in determining whether this deactivation is requested during a braking phase.

2. Method according to the preceding claim, in which the threshold value is expressed in the form of a duration of time separating the host vehicle (1) from the target vehicle, or inter-vehicle time.

3. Method according to the preceding claim, in which the threshold value is between 1 and 5 seconds, preferably between 1.5 and 3 seconds.

4. Method according to claim 1, in which the threshold value is expressed in the form of a distance separating the host vehicle (1) from the target vehicle, or inter-vehicle distance.

5. Method according to the preceding claim, in which the threshold value is between 1 and 100 meters, preferably between 3 and 100 meters.

6. Computer program product comprising instructions which, when the program is executed by a computer, lead it to implement the steps of the method according to one of claims 1 to 5.

7. Assisted driving system (2) comprising a computer (10), at least one control button, means for transmitting an alert message, a sensor (14a, 14b, 16a, 16b, 18) and actuators ( 12) arranged to implement the method according to one of claims 1 to 5.

8. Motor vehicle (1) equipped with an assisted driving system (2) according to the preceding claim and implementing a method according to one of claims 1 to 5.
